# EUROPÄISCHE PATENTSCHRIFT

(11) **EP 1 794 032 B1**
(45) Veröffentlichungstag und Bekanntmachung des Hinweises auf die Patenterteilung: **03.10.2012**
(21) Anmeldenummer: 05767876.5
(22) Anmeldetag: 08.08.2005
(51) Int. Cl.: B60R 16/02

(54) **VERFAHREN UND VORRICHTUNG ZUM KONFEKTIONIEREN EINES JUMPERSCHLAUCHS-KABELS**
METHOD AND DEVICE FOR PRODUCING A SHEATHED JUMPER CABLE
PROCEDE ET DISPOSITIF POUR CONFECTIONNER UN CABLE A GAINE DE RACCORDEMENT

(30) Priorität: 30.09.2004 AT 16352004
(43) Veröffentlichungstag der Anmeldung: 13.06.2007
(73) Patentinhaber: Siemens AG Österreich, 1210 Wien (AT)
(72) Erfinder: PASSENBRUNNER, Alois, A-1050 Wien (AT)
(74) Vertreter: Peham, Alois
(86) Internationale Anmeldenummer: PCT/AT2005/000319
(87) Internationale Veröffentlichungsnummer: WO 2006/034516

(56) Entgegenhaltungen:
- EP-A- 0 535 712
- FR-A- 2 839 587
- PATENT ABSTRACTS OF JAPAN Bd. 1997, Nr. 01, 31. Januar 1997 (1997-01-31) -& JP 08 238995 A (HINO MOTORS LTD), 17. September 1996 (1996-09-17)

## Beschreibung

Die Erfindung bezieht sich auf ein Verfahren zum Konfektionieren eines Jumperschlauch-Kabels, welches aus einem flexiblen Schutzschlauch und darin geführten Kabelleitern besteht, bei welchem zumindest ein Teil des Schutzschlauches in seiner Längsrichtung zur Schaffung einer ausreichenden Leiterüberlänge gestaucht wird, sowie auf eine Vorrichtung zum Konfektionieren eines Jumperschlauch-Kabels, welches aus einem flexiblen Schutzschlauch und darin geführten Kabelleitern besteht.

Im Bereich aneinander gekuppelter Wagen in der Verkehrstechnik, insbesondere bei Schienenfahrzeugen, müssen die einzelnen Wagen eines Zugs nicht nur mechanisch über eine Kupplung, sondern auch elektrisch miteinander verbunden werden. Meist erfolgt die elektrische Verbindung der einzelnen Wagen miteinander mit Hilfe sogenannter Jumperkabel, welche eine flexible, beidseitig steckbare Verbindung zwischen zwei aufeinanderfolgenden Wagenkästen eines Schienenfahrzeuges darstellen. Über Jumperkabel werden je nach Bedarf eine Vielzahl elektrischer Signale, wie z. B. Steuersignale, Niederfrequenzsignale, Bussignale, Antennen - und/oder Videosignale, aber auch elektrische Energie für die Bordversorgung und für den elektrischen Antrieb übertragen. Daher müssen unterschiedlichste Kabel und Leitungstypen in Jumperkabeln integriert werden. Hier ist anzumerken, dass das Zusammenfassen der Kabeln und Leitungen zu einem Jumperkabel aus EMV-Gründen nach Spannungskategorien erfolgt. Beispielsweise werden Nachrichtenkabel üblicherweise nicht mit Energieversorgungsleitungen zusammengelegt.

Es gibt namhafte Kabelhersteller, welche die Anfertigung spezieller, nach Wunsch aufgebauter Jumperkabel anbieten, jedoch sind diese aufgrund der Komplexität und der geringen erforderlichen Bedarfsmenge relativ teuer. Fertig konfektionierte Jumperkabel weisen außerdem den Nachteil auf, dass etwaige Anpassungen durch nachträgliche Stromlaufplanänderungen oft nicht mehr möglich sind. Kompakt aufgebaute Jumperkabel sind aufgrund der hohen dynamischen Beanspruchungen, nämlich Zug, Druck und vor allem Torsion, welche durch die Bewegungen der Wagenkästen zueinander auftreten, mechanisch stark belastet, was im Laufe der Zeit zum Aufplatzen des Kabelmantels und zu einem Kabelbruch führen kann.

Aus den zuletzt genannten Gründen versucht man, die unterschiedlichen Kabel- bzw. Leitertypen in einem Kunststoff-Wellrohrschlauch zu integrieren, welcher für die dynamischen Bewegungen geeignet, insbesondere flexibel und schlagfest ist. Es liegt dann ein Jumperkabel mit flexiblem Schutzschlauch, der oft auch "Wellrohr" genannt vor. Die Flexibilität erlaubt es, dass sämtliche Bewegungen, welche die beiden Wagenkästen während der Fahrt zueinander ausführen, von den Jumperkabel mit Schutzschlauch mitgemacht werden können. Der Schutzschlauch schützt überdies die in ihm liegenden Leitungen vor Beschädigungen, wie z. B. vor Steinschlag.

Derartige Jumperkabel sind beispielsweise aus der FR-A-2 839 587 bekannt. Die Schrift zeigt ein Jumperkabel, bei dem der Schutzschlauch ein starres Kunststoffrohr und flexible Wellrohrelemente umfasst. Auch die JP-A-08 238995 zeigt ein Jumperkabel zur elektrischen Verbindung von Komponenten eines Kraftfahrzeugs.

Bei der Konfektionierung eines Jumperschlauch-Kabels müssen letztlich ein erster und ein zweiter Stecker elektrisch und mechanisch einwandfrei mit dem Jumperschlauch-Kabel verbunden werden. Hier treten Probleme auf, da man zwar den ersten Stecker montieren kann, für die Montage des zweiten Steckers der Schutzschlauch jedoch gestaucht werden muss, was händisch nur äußerst schwierig erfolgen kann. Man benötigt nämlich nach der Montage des ersten Steckers eine Leitungsüberlänge von etwa 80 bis 100 mm um den zweiten Stecker montieren zu können, d. h. die Kabelleiter müssen um diese Länge aus dem Tüllengehäuse des zweiten Steckers hervorragen, damit der entsprechende Steckereinsatz mit den Kontakten und anderen Teilen fachgerecht angeschlossen werden kann. Abgesehen davon, dass das Zurückschieben der erwähnten Leitungsüberlänge in den Schlauchs wegen der Eigensteifigkeit der Leitungen nur schwer möglich ist, besteht auch die Gefahr, dass durch das Hineindrücken des Steckereinsatzes in das Tüllengehäuse infolge der Kabelüberlänge die Kabel und Leistungen verletzt und die zulässigen Biegeradien der Leitungen unterschritten werden, was besonders bei Bus - und/oder Antennenkabeln äußerst kritisch ist, da ein Unterschreiten des zulässigen Biegeradius zu großen Signaldämpfungen führt.

Es ist eine Aufgabe der Erfindung, eine Möglichkeit zu schaffen, welche das Konfektionieren eines Jumperschlauch-Kabels erheblich vereinfacht bzw. in vielen Fällen überhaupt erst möglich macht.

Diese Aufgabe wird mit einem Verfahren der eingangs genannten Art erfindungsgemäß dadurch gelöst, dass an dem Schutzschlauch in Abstand voneinander zwei Klemmmittel angebracht werden, und diese Klemmmittel relativ zueinander im Sinne einer Verkürzung der zwischen den Klemmmitteln liegenden Schlauchlänge gegeneinander bewegt werden, wobei diese Schlauchlänge zumindest abschnittsweise gegen ein Ausweichen in radialer Richtung abgestützt wird. Die Aufgabe wird ebenso mit einer Vorrichtung der eingangs genannten Art gelöst, bei welcher erfindungsgemäß ein erstes Klemmmittel zum Erfassen des Schutzschlauches in einem seiner beiden Endbereiche eingerichtet ist, in Abstand davon ein zweites Klemmmittel vorgesehen ist, welches zum Erfassen des Schutzschlauches in seinem anderen Endbereich eingerichtet ist, und weiters eine Führungseinrichtung zum Führen der Klemmmittel in Längsrichtung des Schutzschlauches und eine Halteeinrichtung zum zumindest abschnittsweisen Abstützen der beiderseits erfassten Schlauchlänge gegen ein Ausweichen in radialer Richtung.

Dank der Erfindung ist es nicht mehr erforderlich, das schwierige und extrem kraftaufwändige Stauchen des Schlauches händisch vorzunehmen und die noch verbleibende Leitungsüberlänge in den Schlauch zurückzudrücken, was nur bei größeren Schlauchlängen und bei geringer Schlauchauslastung überhaupt möglich ist.

Dank der Erfindung kann auf einfachste Weise und mit geringem Aufwand das erforderliche Stauchen bei der Konfektionierung von Jumperkabeln mit Schutzschlauch durchgeführt werden. Auch eine hohe Schlauchauslastung, d. h. eine hohe Kabel- bzw. Leiterdichte innerhalb des Schlauchs stellt kein Problem mehr dar. Ein nach dem erfindungsgemäßen Verfahren bzw. mit einer erfindungsgemäßen Vorrichtung hergestelltes Jumperkabel weist eine hohe Qualität auf, da Kabel und Leitungen bei der Konfektionierung nicht mehr beschädigt werden und Biegeradien von Kabel und/ oder Leitungen nicht mehr unterschritten werden. Besonders bei sensiblen Bus- und Antennenkabeln ist dieser Vorteil nicht zu unterschätzen. Außerdem kann die Fertigung rascher erfolgen, da sie nicht auf die besondere Geschicklichkeit bzw. Kraft eines einzelnen Arbeiters angewiesen ist.

Bei einer Variante des erfindungsgemäßen Verfahrens ist vorgesehen, dass die Klemmmittel an den Endbereichen des Schutzschlauchs angebracht werden, was den Vorteil bringt, dass ein besonders großer Stauchbereich erzielt wird.

Bei einer anderen Variante des erfindungsgemäßen Verfahrens wird vor dem Stauchen zunächst ein erster Stecker elektrisch und mechanisch mit dem Kabel verbunden und sodann ein zweiter Stecker montiert. Diese Vorgangsweise ist vorteilhafter als ein Montieren beider Stecker nach dem Stauchen.

Bei einer vorteilhaften Ausgestaltung der erfindungsgemäßen Vorrichtung sind die Klemmmittel als aufklappbare Schlauchmanschetten ausgebildet. Damit kann der Schutzschlauch auch großflächig erfasst werden, sodass einerseits ein guter Sitz des Schutzschlauchs erreicht und andererseits dessen Beschädigung vermieden wird.

Bei einer anderen Variante der erfindungsgemäßen Vorrichtung sind die Klemmmittel mittels eines Antriebs im Sinne einer Verkürzung der Schlauchlänge gegeneinander bewegbar. Wenngleich es möglich ist, die Klemmmittel auch händisch gegeneinander zu führen, bietet ein solcher Antrieb den Vorteil eines geringeren Kraftbedarfs. Dabei kann der Antrieb aus einem Zugband mit einem Bandspanner bestehen, wobei die Enden des Zugbands je in einem der Klemmmittel befestigt sind. Eine solche Ausführung ist kostengünstig, da im Handel erhältliche Zugbänder und Bandspanner angewendet werden können.

Eine sehr zweckmäßige Ausgestaltung der erfindungsgemäßen Vorrichtung sieht vor, dass die Führungseinrichtung zwei Führungsstäbe aufweist, wobei jedes Klemmmittel mit Hilfe von Stegen auf der Führungseinrichtung geführt ist und die Führungsstäbe die Bohrungen der Stege durchsetzen.

Die Erfindung samt weiteren Vorteilen ist im folgenden anhand beispielsweiser Ausführungsformen näher erläutert, die in der Zeichnung veranschaulicht sind. In dieser zeigen:
- Fig. 1: ein Jumperschlauch-Kabel, bei welchem an einem Ende bereits ein Stecker montiert ist und das zu konfektionieren ist,
- Fig. 2: das Jumperschlauch-Kabel nach Fig. 1, das in einer erfindungsgemäßen Vorrichtung zum Konfektionieren des Kabels aufgenommen ist, in schematischer und vereinfachter Darstellung,
- Fig. 3: ein Detail einer erfindungsgemäßen Vorrichtung zum Konfektionieren eines Jumperschlauch-Kabels in schaubildlicher Darstellung und
- Fig. 4: den Bereich eines Jumperschlauch-Kabels mit einem daran angebrachten Stecker.

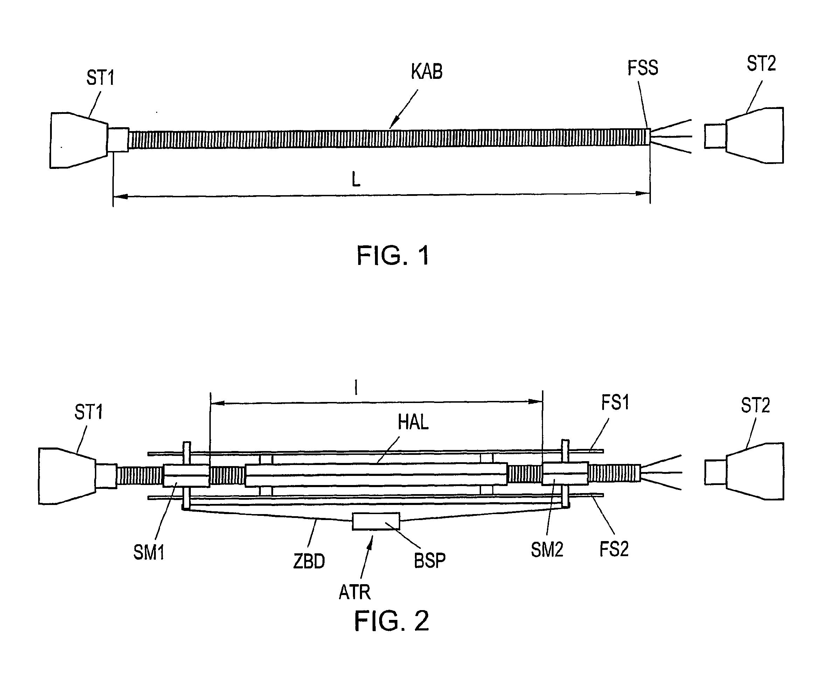

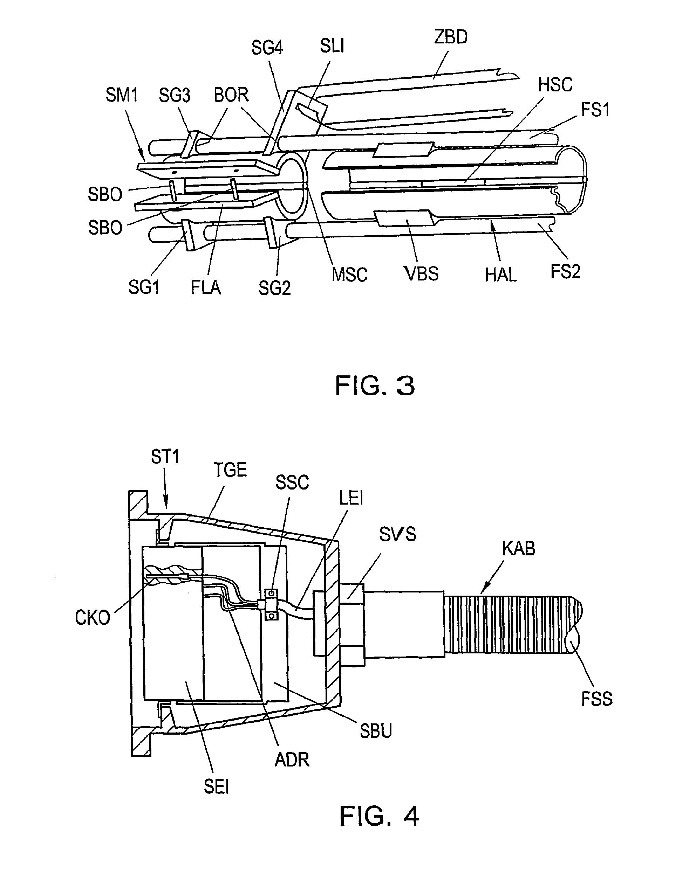

Fig. 1 zeigt ein Jumperschlauch-Kabel KAB, bei welchem an einer Seite bereits ein Stecker ST1 montiert ist. Auf der anderen, in der Zeichnung rechten Seite, ist im Zuge der Konfektionierung des Kabels ein zweiter Stecker ST2 zu befestigen. Der Schutzschlauch FSS des Kabels (siehe auch Fig. 4) ist ein flexibler Schlauch der Länge L, wobei ein solcher Schlauch auch "Wellrohr" genannt wird.

Wie aus Fig. 4 hervorgeht, besitzt der Stecker ST1 ein Tüllengehäuse TGE, an welchem mit Hilfe einer Schlauchverschraubung SVS der flexible Schutzschlauch FSS befestigt ist. Mehrfachader-Leitungen LEI mit mehreren Adern ADR sind in dem Inneren des Schutzschlauchs FSS geführt, mit einer Schirmschelle SSC an einem Schirmbügel SBU fixiert und zu Crimpkontakten CKO in einem Steckereinsatz SEI geführt. Das Kabel KAB mit dem Schutzschlauch FSS enthält im Allgemeinen weitere Kabel- und Leiter, wobei diese anderen Kabel bzw. Leitungen zur Vereinfachung hier nicht eingezeichnet sind.

Nun wird auf Fig. 2 Bezug genommen, welche sehr schematisch eine mögliche Ausführungsform einer erfindungsgemäßen Vorrichtung zeigt, mit welcher das erfindungsgemäße Verfahren durchgeführt werden kann. Die Vorrichtung weist zwei Klemmmittel SM1 und SM2 auf, welche den Schutzschlauch erfassen und an den Enden einer Schlauchlänge 1 festklemmen können. Diese Klemmmittel sind längs einer Führungseinrichtung geführt, die im vorliegenden Fall aus zwei Führungsstäben FS1 und FS2 besteht. Zwischen den beiden Klemmmitteln ist weiters eine Halteeinrichtung HAL vorgesehen, welcher der Zweck zukommt, bei einem Stauchen des Schutzschlauchs ein Ausweichen des Schutzschlauchs in radialer Richtung zu verhindern. Die Halterung HAL ist ebenso wie die beiden Klemmmittel SM1 und SM2 im vorliegenden Fall an den Führungsstäben FS1 und FS2 befestigt.

Fig. 3 zeigt in konkreterer Darstellung den Endabschnitt einer Ausführungsform einer erfindungsgemäßen Vorrichtung, die sich in der Praxis bewährt hat. Wie man ersieht, ist das Klemmmittel SM1 (ebenso wie das hier nicht gezeigte Klemmmittel SM2) als aufklappbare Schlauchmanschette ausgebildet. Diese besteht aus zwei Hälften, die um ein Scharnier MSC aufgeklappt werden können und die im geschlossenen Zustand den in Fig. 3 nicht gezeigten Schutzschlauch umfassen und festklemmen können. Dazu sind in von dem Kreisquerschnitt der Schlauchmanschette SM1 abstehenden Flanschen FLA Bohrungen ausgebildet, durch welche Schraubbolzen SBO steckbar und mit Hilfe nicht gezeigter Muttern verschraubbar sind. Die beiden Hälften der Schlauchmanschette SM1 (erstes Klemmmittel) sind fest mit Stegen SG1 ... SG4 verbunden und diese Stege sind auf den Führungsstäben FS1, FS2 verschieblich geführt, wozu Bohrungen BOR vorgesehen sind, welche die Führungsstäbe FS1, FS2 aufnehmen.

Die Halteinrichtung HAL besteht bei dieser Ausführungsform aus einem aufklappbaren Rohr. Die beiden Rohrhälften sind einerseits gegeneinander um Scharniere HSC verschwenkbar und andererseits je mit den Führungsstäben FS1, FS2 fest verbunden. Genauer gesagt sind die beiden Rohrhälften mit Hilfe von Verbindungsstegen VBS an den Führungsstäben FS1, FS2 befestigt, z. B. festgeschweißt.

Aus Fig. 3 geht hervor, dass zufolge der festen Verbindung der Hälften der Klemmmittel SM1 (bzw. SM2) und der Hälften des Halterohres HAL mit den Führungsstäben FS1, FS2 die gesamte Vorrichtung um die Scharniere MSC bzw. HSC aufgeklappt werden kann. In diesem aufgeklappten Zustand kann das Kabel KAB eingelegt werden. Sodann wird die Vorrichtung wieder zugeklappt und die Klemmmittel SM1 und SM2 werden, in diesem Beispiel mit Hilfe der Schraubbolzen SBO, so an den Schutzschlauch FSS gelegt, dass dieser festgehalten wird. In der Halteeinrichtung HAL, d. h. dem zusammenklappbaren Halterohr, ist das Kabel KAB hingegen mit Spiel geführt und nicht festgeklemmt.

Um das bereits eingangs beschriebene Konfektionieren des Kabels durchzuführen, werden nun (siehe auch Fig. 2) die beiden Klemmmittel SM1 und SM2 im Sinne einer Verkürzung des Schutzschlauchs FSS gegeneinander bewegt, sodass ein Stauchen des Schutzschlauchs auftritt und eine Leiterüberlänge geeigneten Ausmaßes (hier an dem rechten Ende) erhalten wird. Nun kann der zweite Stecker ST2 mechanisch und elektrisch korrekt mit dem Kabel KAB verbunden werden und danach wird die erfindungsgemäße Vorrichtung aufgeklappt und das fertige Kabel KAB freigegeben.

Das Gegeneinanderführen der beiden Klemmmittel SM1, SM2 kann zwar auch händisch erfolgen, da bereits die Klemmmittel einerseits und andererseits deren Führung längs der Führungsstäbe FS1 und FS2 eine Erleichterung bringen, doch ist zweckmäßigerweise ein Antrieb vorgesehen, der das Zusammenführen der beiden Klemmmittel SM1, SM2 erleichtert. Im vorliegenden Fall besteht dieser Antrieb aus einem Zugband ZBD, das mit seinen Enden in den Klemmmitteln SM1, SM2 eingehängt oder befestigt ist und das mit Hilfe eines handelsüblichen Bandspanners BSP verkürzt werden kann, sodass sich die beiden Klemmmittel SM1 und SM2 gegeneinander bewegen und der Schutzschlauch FSS gestaucht wird. In Fig. 3 ist gezeigt, dass das Zugband ZBD beispielsweise in einem Schlitz SLI eines Steges SG4 des ersten Klemmmittels SM1 eingehängt sein kann. In gleicher Weise erfolgt ein Einhängen bei dem zweiten Klemmmittel SM2.

Während des oben beschriebenen Stauchens wird der Wellrohr-Schutzschlauch um beispielsweise 80 -100 mm gestaucht, wobei diese Stauchung elastisch ist, sodass dem Schlauch kein Schaden zugeführt wird. Nach der Montage des zweiten Steckers ST2 und dem Lösen des Bandspanners BSP nimmt der Schlauch wieder seine ursprüngliche Länge ein und mündet in die Schlauchverschraubung des zweiten Steckers ST2 ein. Das fertig konfektionierte Jumperkabel kann dann nach dem Auseinanderklappen der Vorrichtung der selben entnommen werden.

## Patentansprüche

1. Verfahren zum Konfektionieren eines Jumperschlauch-Kabels (KAB), welches aus einem flexiblen Schutzschlauch (FSS) und darin geführten Kabelleitern (LEI) besteht, bei welchem zumindest ein Teil des Schutzschlauches in seiner Längsrichtung zur Schaffung einer ausreichenden Leiterüberlänge gestaucht wird
**dadurch gekennzeichnet, dass**
an dem Schutzschlauch in Abstand voneinander zwei Klemmmittel (SM1, SM2) angebracht werden,
und diese Klemmmittel relativ zueinander im Sinne einer Verkürzung der zwischen den Klemmmitteln liegenden Schlauchlänge (1) gegeneinander bewegt werden,
wobei diese Schlauchlänge zumindest abschnittsweise gegen ein Ausweichen in radialer Richtung abgestützt wird.

2. Verfahren nach Anspruch 1, **dadurch gekennzeichnet, dass** die Klemmmittel an den Endbereichen des Schutzschlauches angebracht werden.

3. Verfahren nach Anspruch 1 oder 2, **dadurch gekennzeichnet, dass** vor dem Stauchen zunächst ein erster Stecker (ST1) elektrisch und mechanisch mit dem Kabel verbunden wird und darnach ein zweiter Stecker (ST2) montiert wird.

4. Vorrichtung zum Konfektionieren eines Jumperschlauch-Kabels (KAB), welches aus einem flexiblen Schutzschlauch (FSS) und darin geführten Kabelleitern (LEI) besteht,
**dadurch gekennzeichnet, dass**
ein erstes Klemmmittel (SM1) zum Erfassen des Schutzschlauches (FSS) in einem seiner beiden Endbereiche eingerichtet ist,
in Abstand davon ein zweites Klemmmittel (SM2) vorgesehen ist, welches zum Erfassen des Schutzschlauches in seinem anderen Endbereich eingerichtet ist, und weiters
eine Führungseinrichtung (FS1, FS2) zum Führen der Klemmmittel in Längsrichtung des Schutzschlauches und
eine Halteeinrichtung (HAL) zum zumindest abschnittsweisen Abstützen der beiderseits erfassten Schlauchlänge gegen ein Ausweichen in radialer Richtung.

5. Vorrichtung nach Anspruch 4 , **dadurch gekennzeichnet, dass** die Klemmmittel als aufklappbare Schlauchmanschetten (SM1, SM2) ausgebildet sind.

6. Vorrichtung nach Anspruch 4 oder 5, **dadurch gekennzeichnet, dass** die Klemmmittel (SM1, SM2) mittels eines Antriebes (BSP, ZBD) im Sinne einer Verkürzung der Schlauchlänge (1) gegeneinander bewegbar sind.

7. Vorrichtung nach Anspruch 6, **dadurch gekennzeichnet, dass** der Antrieb aus einem Zugband (ZBD) mit einem Bandspanner (BSP) besteht, wobei die Enden des Zugbandes je in einem der Klemmmittel (SM1, SM2) befestigt sind.

8. Vorrichtung nach einem der Ansprüche 4 bis 7, **dadurch gekennzeichnet, dass** die Führungseinrichtung zwei Führungsstäbe (FS1, FS2) aufweist.

9. Vorrichtung nach Anspruch 8, **dadurch gekennzeichnet, dass** jedes Klemmmittel (SM1, SM2) mit Hilfe von Stegen (SG1.... SG4) auf der Führungseinrichtung geführt ist, wobei die Führungsstäbe (FS1, FS2) je Bohrungen (BOR) der Stege durchsetzen.

## Claims

1. Method for producing a sheathed jumper cable (KAB) consisting of a flexible protective sheath (FSS) and cable conductors (LEI) that are provided therein, wherein at least a part of the protective sheath is compressed its longitudinal direction to create a sufficient excess length of the conductor
**characterised in that**
two clamping elements (SM1, SM2) are attached to the protective sheath at a distance from each other,
and said clamping elements are displaced in relation to one another in order to shorten the length (1) of the sheath between the clamping elements
said sheath length being braced at least in sections against a divergence in a radial direction.

2. Method according to claim 1, **characterised in that** the clamping elements are arranged on the end regions of the protective sheath.

3. Method according to claim 1 or 2, **characterised in that** before the compression, a first connector (ST1) is electrically and mechanically connected to the cable, and subsequently a second connector (ST2) is mounted.

4. Device for producing a sheathed jumper cable (KAB) consisting of a flexible protective sheath (FSS) and cable conductors (LEI) that are provided therein,
**characterised in that**
a first clamping element (SM1) for gripping the protective sheath (FSS) is arranged in one of its two end regions,
at a distance therefrom, a second clamping element (SM2) is provided which is arranged in its other end region for gripping the protective sheath, and furthermore
a guiding assembly (FS1, FS2) for guiding the clamping elements in the longitudinal direction of the protective sheath and
a retaining assembly (HAL) for bracing the sheath length gripped on both sides at least in sections against a divergence in a radial direction.

5. Device according to claim 4, **characterised in that** the clamping elements are embodied as foldable sheath sleeves (SM1, SM2).

6. Device according to claim 4 or 5, **characterised in that** the clamping elements (SM1, SM2) are displaced in relation to one another in order to shorten the length (1) of the sheath by means of a drive (BSP, ZBD).

7. Device according to claim 6, **characterised in that** the drive consists of a pull tape (ZBD) having a tape tensioner (BSP), wherein the ends of the pull tape are each fastened in one of the clamping elements (SM1, SM2).

8. Device according to one of claims 4 to 7, **characterised in that** the guiding assembly has two guide bars (FS1, FS2).

9. Device according to claim 8, **characterised in that** each clamping element (SM1, SM2) is guided on the guiding assembly with the aid of studs (SG1...SG4), the guide bars (FS1, FS2) each establishing holes (BOR) in the studs.

## Revendications

1. Procédé pour confectionner un câble jumper (KAB) se composant d'une gaine de protection flexible (FSS) et de conducteurs (LEI) guidés dans celle-ci, dans lequel au moins une partie de la gaine de protection est comprimée dans le sens longitudinal pour créer une surlongueur suffisante des conducteurs,
**caractérisé en ce que**
deux moyens de serrage (SM1, SM2) sont montés à distance l'un de l'autre sur la gaine de protection,
et ces moyens de serrage sont déplacés l'un vers l'autre, dans le sens d'un raccourcissement de la longueur de gaine (I) située entre les moyens de serrage,
cette longueur de gaine étant soutenue au moins en partie de manière à empêcher une déformation dans le sens radial.

2. Procédé selon la revendication 1, **caractérisé en ce que** les moyens de serrage sont montés sur les parties d'extrémité de la gaine de protection.

3. Procédé selon la revendication 1 ou 2, **caractérisé en ce qu**'avant la compression on raccorde d'abord électriquement et mécaniquement un premier connecteur (ST1) sur le câble, puis on monte un deuxième connecteur (ST2).

4. Dispositif pour confectionner un câble jumper (KAB) se composant d'une gaine de protection flexible (FSS) et de conducteurs (LEI) guidés dans celle-ci,
**caractérisé en ce que**
un premier moyen de serrage (SM1) destiné à saisir la gaine de protection (FSS) est agencé dans l'une de ses deux parties d'extrémité,
à distance de celle-ci, il est prévu un deuxième moyen de serrage (SM2), agencé de manière à saisir la gaine de protection dans son autre partie d'extrémité, et en outre
un dispositif de guidage (FS1, FS2) destiné à guider les moyens de serrage dans le sens longitudinal de la gaine de protection, et
un dispositif de maintien (HAL) destiné à soutenir au moins en partie la longueur de gaine saisie des deux côtés de manière à empêcher une déformation dans le sens radial.

5. Dispositif selon la revendication 4, **caractérisé en ce que** les moyens de serrage sont réalisés sous forme de manchons tubulaires dépliables (SM1, SM2).

6. Dispositif selon la revendication 4 ou 5, **caractérisé en ce que** les moyens de serrage (SM1, SM2) peuvent être déplacés l'un vers l'autre au moyen d'un entraînement (BSP, ZBD), dans le sens d'un raccourcissement de la longueur de gaine (I).

7. Dispositif selon la revendication 6, **caractérisé en ce que** l'entraînement se compose d'une bande de traction (ZBD) équipée d'un tendeur de bande (BSP), les extrémités de la bande de traction étant fixées respectivement dans l'un des moyens de serrage (SM1, SM2).

8. Dispositif selon l'une des revendications 4 à 7, **caractérisé en ce que** le dispositif de guidage comporte deux barres de guidage (FS1, FS2).

9. Dispositif selon la revendication 8, **caractérisé en ce que** chaque moyen de serrage (SM1, SM2) est guidé sur le dispositif de guidage à l'aide d'entretoises (SG1 ... SG4), les barres de guidage (FS1, FS2) traversant chacune des alésages (BOR) desdites entretoises.
